# EUROPÄISCHE PATENTSCHRIFT

(11) **EP 4 258 954 B1**
(45) Veröffentlichungstag und Bekanntmachung des Hinweises auf die Patenterteilung: **22.04.2026**
(21) Anmeldenummer: 21836032.9
(22) Anmeldetag: 06.12.2021
(51) Int. Cl.: A47J 31/20

(54) **FILTERVORRICHTUNG ZUM FILTERN VON UNLÖSLICHEM MATERIAL**
FILTER DEVICE FOR FILTERING INSOLUBLE MATERIAL
DISPOSITIF DE FILTRATION POUR FILTRER UNE MATIÈRE INSOLUBLE

(30) Priorität: 11.12.2020 DE 102020133229
(43) Veröffentlichungstag der Anmeldung: 18.10.2023
(73) Patentinhaber: PI-Design AG, 6340 Baar (CH)
(72) Erfinder: BODUM, Jorgen, 6045 Meggen (CH)
(74) Vertreter: Walther Bayer Faber Patentanwälte PartGmbB
(86) Internationale Anmeldenummer: PCT/EP2021/084414
(87) Internationale Veröffentlichungsnummer: WO 2022/122660

(56) Entgegenhaltungen:
- EP-A1- 3 132 724
- WO-A1-2007/082391
- WO-A1-2014/140418
- WO-A1-2018/194450
- US-A1- 2020 107 667

## Beschreibung

Die vorliegende Erfindung betrifft eine Filtervorrichtung zum Filtern von unlöslichem Material.

Derartige Filtervorrichtungen werden insbesondere zum Zubereiten von Kaffee und Tee eingesetzt. Die Filtervorrichtung weist einen rohrförmigen Stahlkörper mit einer Vielzahl von Filteröffnungen auf. An diesem Stahlkörper ist ein Bodenstahlkörper angeschweißt, der ebenfalls eine Vielzahl von Filteröffnungen aufweisen kann, häufig jedoch geschlossen ist.

Zum Zubereiten von Kaffee oder Tee wird das Kaffeepulver oder werden die Teeblätter in die Filtervorrichtung eingefüllt, die Filtervorrichtung in eine Einsatzöffnung eines Gefäßes, beispielsweise in eine Kaffeekanne, Teekanne oder Filterhalterung eingesetzt und anschließend kochendes Wasser in die Filtervorrichtung eingegossen. Das kochende Wasser tritt mit dem Kaffeepulver oder den Teeblättern in Kontakt und extrahiert hierbei die Aromastoffe. Nach einer gewissen Kontaktzeit zwischen dem Wasser und dem Kaffeepulver oder den Teeblättern ist der Kaffee oder der Tee zubereitet, so dass die Filtervorrichtung aus der Kaffeekanne, Teekanne oder Filterhalterung entnommen und der Kaffee oder Tee in eine Tasse gegossen werden kann.

Eine besondere Anwendung stellt die Verwendung von sogenannten Filterpressen dar, die beispielsweise in der WO 2017/080885 beschrieben sind. Bei diesen wird von oben ein Filterkolben in den Stahlkörper eingebracht und zum Bodenstahlkörper hin gedrückt. Bei dieser Anwendung weist der Bodenstahlkörper keine Filteröffnungen auf. Auch der Stahlkörper weist benachbart zum Bodenstahlkörper üblicherweise keine Filteröffnungen auf. Wird der Filterkolben in Richtung des Bodenstahlkörpers bewegt, sammelt sich das Kaffeepulver oder sammeln sich die Teeblätter im Bereich des Bodenstahlkörpers und können dann nicht oder nur in vernachlässigbar kleinem Umfang mit dem Wasser in Kontakt treten. Zudem gelangt das Kaffeepulver oder gelangen die Teeblätter nicht in die Kaffeekanne bzw. in die Teekanne. Die Extraktion des Kaffeepulver aus oder der Teeblätter wird durch das Herunterdrücken des Filterkolbens weitgehend beendet.

Bei der Verwendung von Filterkolben verbleibt die Filtervorrichtung üblicherweise so lange in der Kaffeekanne oder der Teekanne, bis dass diese vollständig entleert worden sind. Will man den Kaffee oder den Tee aus der Kaffeekanne oder der Teekanne in eine Tasse gießen, besteht die Gefahr, dass hierbei die Filtervorrichtung aus der Kaffeekanne oder der Teekanne herausfallen kann.

Aus der WO 2007/082391 Al ist eine Filtervorrichtung bekannt, welche am oberen Rand radial nach außen weisende Auswölbungen aufweist, die von einem Kunststoffteil gebildet werden, welches an einen oberen Stahlkörper befestigt ist, wobei der obere Stahlkörper an den Stahlkörper angeschweißt ist. Dabei ist das Kunststoffteil so ausgebildet, dass die Auswölbungen eine gewisse Elastizität oder Nachgiebigkeit aufweisen. Mit dem oberen Rand kann die Filtervorrichtung mit der Einsatzöffnung der Kaffeekanne oder der Teekanne verspannt werden, um das Herausfallen der Filtervorrichtung beim Eingießen von Kaffee oder Tee in eine Tasse zu vermeiden. Darüber hinaus können sich die Auswölbungen mehr oder weniger stark verformen, so dass sich die Filtervorrichtung innerhalb von gewissen Grenzen an unterschiedliche Größen der Einsatzöffnung und an Toleranzabweichungen, insbesondere bei Kaffeekannen oder Teekannen aus Glas anpassen kann.

Aus den obigen Ausführungen ergibt sich, dass die Filtervorrichtung gemäß der WO 2007/082391 Al insgesamt drei Stahlkörper aufweist, so dass folglich zwei Schweißnähte benötigt werden, um die drei Stahlkörper miteinander zu verbinden. An dieser Stelle soll angemerkt werden, dass bei der Herstellung des Stahlkörpers aus einem Flachmaterial auch eine Schweißnaht benötigt wird, um das Flachmaterial in eine zylindrische Form zu überführen, diese dient aber nicht dazu, die drei Stahlkörper miteinander zu verbinden.

Um eine ausreichend stabile Verbindung zwischen dem oberen Stahlkörper und dem Kunststoffteil bereitzustellen, muss zudem das obere Stahlkörper mit einem Flansch versehen werden. Hierdurch ist die Herstellung der Filtervorrichtung vergleichsweise kompliziert und folglich teuer.

Des Weiteren wird auf die WO 2018/194450 A1 verwiesen, die eine Vorrichtung zum Zubereiten von Tee zeigt.

Aufgabe einer Ausführungsform der vorliegenden Erfindung ist es, eine Filtervorrichtung zum Filtern von unlöslichem Material vorzuschlagen, die sich im Vergleich zu den aus dem Stand der Technik bekannten Filtervorrichtungen einfacher fertigen lässt.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft eine Filtervorrichtung zum Filtern von unlöslichem Material, welches bei der Zubereitung von Getränken verwendet wird, insbesondere zum Filtern von Teeblättern oder Kaffeepulver, umfassend
- einen Stahlkörper mit einer Vielzahl von Filteröffnungen,
- zumindest ein Kunststoffteil aus einem spritzgussfähigen Kunststoff, der in einem Verbindungsabschnitt des Stahlkörpers um den Stahlkörper spritzt ist, wobei
   ∘ im Verbindungsabschnitt zumindest eine Ausnehmung angeordnet ist, welche zumindest teilweise vom Kunststoffteil ausgefüllt wird, oder
   ∘ der Stahlkörper im Verbindungsabschnitt einen vom Stahlkörper abstehenden Fortsatz bildet, welcher zumindest teilweise vom Kunststoffteil umschlossen ist.

Bei der vorschlagsgemäßen Filtervorrichtung ist es möglich, eine direkte Verbindung zwischen dem Kunststoffteil und dem Stahlkörper bereitzustellen. Dabei greift das Kunststoffteil in die Ausnehmungen ein und füllt diese zumindest teilweise aus, oder das Kunststoffteil umschließt den Fortsatz, wodurch eine Hinterschneidung und folglich ein Formschluss zwischen dem Kunststoffteil und dem Stahlkörper hergestellt wird. Hierzu muss der Stahlkörper nur entsprechend in ein Spritzgusswerkzeug eingelegt werden. Bei der vorschlagsgemäßen Filtervorrichtung wird der obere Stahlkörper gegenüber der WO 2007/082391 Al durch das Kunststoffteil ersetzt. Es ist daher nicht mehr notwendig, eine zusätzliche Schweißnaht vorzusehen, um den obere Stahlkörper mit dem Stahlkörper zu verbinden. Auch ist es nicht mehr notwendig, den oberen Stahlkörper mit einem Flansch zu versehen. Hierdurch wird die Fertigung vereinfacht und daher kostengünstiger.

Erfindungsgemäß umfasst die Filtervorrichtung ein weiteres Kunststoffteil, wobei das Kunststoffteil zumindest Aufnahmeabschnitte für ein weiteres Kunststoffteil aufweist, welches um das Kunststoffteil gespritzt ist.

Das Vorsehen eines weiteren Kunststoffteils ermöglicht es, die Filtervorrichtung mit weiteren Funktionen zu versehen. Beispielsweise kann das weitere Kunststoffteil eine Öse oder dergleichen bilden, mit welcher die Filtervorrichtung an einen Haken aufgehängt werden kann. Hierdurch kann die Filtervorrichtung beispielsweise in einer Küche gut gelagert werden. Das Kunststoffteil, welches mit dem Stahlkörper verbunden ist, muss hierzu nicht geändert werden. Insofern lassen sich mit vergleichsweise einfachen Mitteln verschiedene Varianten der Filtervorrichtung bereitstellen.

Nach Maßgabe einer weiteren Ausführungsform kann die Ausnehmung als eine den Stahlkörper vollständig durchlaufende Durchgangsöffnung ausgebildet sein. In dieser Ausführungsform lässt sich die Ausnehmung beispielsweise durch Stanzen vergleichsweise einfach und kostengünstig herstellen. Zudem wird die Größe der Hinterschneidung maximiert. Die Verbindung zwischen dem Kunststoffteil und dem Stahlkörper wird infolgedessen gestärkt.

In einer weitergebildeten Ausführungsform können
- der Stahlkörper eine erste Seite und eine zweite Seite aufweisen,
- die Durchgangsöffnung den Stahlkörper von der ersten Seite zur zweiten Seite durchlaufen, und
- das Kunststoffteil an der ersten Seite und an der zweiten Seite um den Stahlkörper gespritzt sein und die Durchgangsöffnung vollständig ausfüllen.

In dieser Ausführungsform liegt das Kunststoffteil sowohl an der ersten Seite als auch an der zweiten Seite am Stahlkörper an. Zudem wird die Durchgangsöffnung vollständig vom Kunststoffteil durchlaufen. Hierdurch wird eine besonders belastbare Verbindung zwischen dem Kunststoffteil und dem Stahlkörper bereitgestellt.

Bei einer weitergebildeten Ausführungsform können
- der Stahlkörper einen oberen Rand und einen unteren Rand aufweisen,
- der obere Rand radial auswärts vom übrigen Stahlkörper abstehen und eine Einfüllöffnung umschließen,
- der Verbindungsabschnitt vom oberen Rand gebildet werden, und
- das Kunststoffteil am oberen Rand angeordnet sein.

In dieser Ausführungsform kann das Kunststoffteil radial außen angebracht werden, so dass es gut zugänglich ist. Wie eingangs erwähnt, wird kochendes Wasser in die Filtervorrichtung eingegossen, um dieses in Kontakt mit Kaffeepulver oder Teeblättern zu bringen. Folglich kann sich auch die Filtervorrichtung erwärmen. Aufgrund der geringeren Wärmeleitfähigkeit des Kunststoffteils im Vergleich zum Stahlkörper wird die Gefahr von Verbrennungen eines Benutzers, der die Filtervorrichtung mit seiner Hand ergreift, verringert.

Gemäß einer weitergebildeten Ausführungsform umfasst das Kunststoffteil einen ersten Kunststoff und einen zweiten Kunststoff, wobei der erste Kunststoff die Ausnehmung ausfüllt oder den Fortsatz umschließt und der zweite Kunststoff den ersten Kunststoff zumindest teilweise umschließt. Aufgrund der Verwendung von zwei unterschiedlichen Kunststoffen, die beide vorzugsweise spritzgussfähig sind, können ihre Eigenschaften optimal für ihre Aufgaben verwendet werden. Der erste Kunststoff stellt die Verbindung zwischen dem Kunststoffteil und dem Stahlkörper her, so dass der erste Kunststoff insbesondere eine hohe Formtreue auch bei sich ändernden Temperaturen aufweisen soll. Der zweite Kunststoff ist derjenige Kunststoff, der von einem Benutzer ergriffen wird. Insofern kann der zweite Kunststoff nach Gesichtspunkten der Haptik und Optik gewählt werden.

Nach einer weiteren Ausführungsform weist der erste Kunststoff eine geringere Härte auf als der zweite Kunststoff und/oder weist der zweite Kunststoff eine geringere Wärmeleitfähigkeit auf als der erste Kunststoff. Wie erwähnt, bildet der erste Kunststoff die Verbindung des Kunststoffteils zum Stahlkörper. Mit einem härteren Kunststoff kann eine besonders dauerhafte Verbindung zwischen dem Kunststoffteil und dem Stahlkörper geschaffen werden. Im Gegensatz dazu weist ein weicherer Kunststoff eine für den Benutzer angenehmere Haptik auf. Wie eingangs erwähnt, wird die Filtervorrichtung in eine Kaffeekanne oder Teekanne aufgesetzt oder in diese eingesetzt. Ein weicherer Kunststoff kann sich zu einem gewissen Grad der Form der Kaffeekanne oder Teekanne im Kontaktbereich anpassen, so dass ein unbeabsichtigtes Verrutschen zumindest erschwert wird, wodurch die Betriebssicherheit erhöht wird.

Die geringere Wärmeleitfähigkeit des zweiten Kunststoffs sorgt dafür, dass sich das Kunststoffteil dort, wo der Benutzer die Filtervorrichtung ergreift, auch dann nur in geringem Umfang erwärmt, wenn kochendes Wasser auf das unlösliche Material gegossen wird. Insofern wird die Wahrscheinlichkeit des Verbrennens der Hände des Benutzers bei Gebrauch der Vorrichtung deutlich reduziert.

Diese Bedingungen werden beispielsweise dann erfüllt, wenn als erster Kunststoff Polypropylen (PP) und als zweiter Kunststoff ein thermoplastischer Elastomer (TPE) eingesetzt wird.

Bei einer weiteren Ausführungsform kann der obere Rand eine obere Randweite und der untere Rand eine untere Randweite aufweisen, wobei die obere Randweite größer ist als die untere Randweite. In dieser Ausführungsform kann der Stahlkörper annäherungsweise die Form eines Kegelstumpfes oder eines Pyramidenstumpfes aufweisen. Zudem hat sich herausgestellt, dass aufgrund der kegelstumpfförmigen oder pyramidenstumpfförmigen Gestaltung des Stahlkörpers ein Aufstauen des Wassers in der Filtervorrichtung vermieden oder zumindest verlangsamt wird.

Eine weitergebildete Ausführungsform kann sich dadurch auszeichnen, dass am unteren Rand ein Bodenstahlkörper an den Stahlkörper angeschweißt ist. Um zu verhindern, dass das Kaffeepulver oder die Teeblätter über den unteren Rand in die Kaffeekanne oder Teekanne gelangen können, muss sichergestellt sein, dass der Stahlkörper im Bereich des unteren Rand geschlossen ist. Aus fertigungstechnischen Gründen lässt sich der Stahlkörper am einfachsten mit einem Bodenstahlkörper im Bereich des unteren Randes verschließen.

Nach Maßgabe einer weiteren Ausführungsform kann der Bodenstahlkörper eine Bodenwand und zumindest eine Seitenwand aufweisen, wobei die Bodenwand mit einer Vielzahl von Filteröffnungen versehen ist oder die Bodenwand eine Bodenöffnung umschließen, welche von einer Bodenplatte mit einer Vielzahl von Filteröffnungen bedeckt wird. Um die Extraktion des Kaffeepulver oder der Teeblätter möglichst optimal gestalten zu können, sollte die Verweilzeit des kochenden Wassers in der Filtervorrichtung weder zu kurz noch zu lang sein. Zudem soll ein Aufstauen oder sogar ein Verstopfen des Stahlkörpers verhindert werden. Es hat sich herausgestellt, dass das Vorsehen der Bodenwand mit einer Vielzahl von Filteröffnungen bei einer gleichzeitigen Gestaltung der Seitenwand ohne Filteröffnungen die Verweilzeit des kochenden Wassers innerhalb der Filtervorrichtung erhöht werden kann, ohne jedoch ein Aufstauen des Wassers oder ein Verstopfen des Stahlkörpers zu riskieren. Eine geringe Erhöhung der Verweilzeit führt zu einem intensiveren oder stärkeren Kaffee oder Tee, ohne dass dieser zu bitter wird. Der Bodenstahlkörper kann einteilig oder zweiteilig ausgeführt werden. Die Bodenplatte kann eben ausgestaltet sein, wodurch die Fertigung der Filteröffnungen im Vergleich zur einteiligen Ausgestaltung vereinfacht wird, beispielsweise deshalb, weil die Wandstärke der Bodenplatte unabhängig vom übrigen Bodenstahlkörper gewählt werden kann. Insbesondere kann die Wandstärke der Bodenplatte geringer sein als diejenige des übrigen Bodenstahlkörpers, wodurch die Fertigung der Filteröffnungen vereinfacht und beschleunigt werden kann.

Bei einer weiteren Ausführungsform kann es sich anbieten, dass
- der Stahlkörper eine erste Seite und eine zweite Seite aufweist,
- die Durchgangsöffnung den Stahlkörper von der ersten Seite zur zweiten Seite durchläuft, und
- das Kunststoffteil
   ∘ an der ersten Seite um den Stahlkörper gespritzt ist, wobei das Kunststoffteil im Bereich der Durchgangsöffnung mit der zweiten Seite bündig abschließt oder
   ∘ an der zweiten Seite um den Stahlkörper gespritzt ist, wobei das Kunststoffteil im Bereich der Durchgangsöffnung mit der ersten Seite bündig abschließt oder
- das Kunststoffteil
   ∘ an der ersten Seite um den Stahlkörper gespritzt ist und der Fortsatz über die erste Seite übersteht, oder
   ∘ an der zweiten Seite um den Stahlkörper gespritzt ist und der Fortsatz über die zweite Seite übersteht.

In dieser Ausführungsform umschließt das Kunststoffteil in Stahlkörper nur von einer Seite. Zudem schließt das Kunststoffteil im Bereich der Durchgangsöffnung mit derjenigen Seite bündig ab, die nicht vom Kunststoffteil umschlossen wird. Die nicht vom Kunststoffteil umschlossene Seite weist folglich keine Vertiefungen oder Erhebungen auf. Das Anhaften von Kaffeepulver oder Teeblättern wird hierdurch verhindert, so dass das Reinigen der Filtervorrichtung einfach gehalten wird.

Nach Maßgabe einer weiteren Ausführungsform können
- der Stahlkörper einen oberen Rand und einen unteren Rand aufweisen,
- der obere Rand eine Einfüllöffnung umschließen,
- der Verbindungsabschnitt vom oberen Rand gebildet werden und
- das Kunststoffteil am oberen Rand angeordnet sein.

Das Anordnen des Kunststoffteils am oberen Rand ermöglicht es einem Benutzer, die Filtervorrichtung auch dann sicher zu ergreifen, wenn diese vom kochenden Wasser aufgeheizt worden ist.

Bei einer weitergebildeten Ausführungsform können das Kunststoffteil eine Anzahl von außerhalb des Stahlkörpers angeordneten Durchbrüchen und das weitere Kunststoffteil dieselbe Anzahl von Vorsprüngen aufweisen, welche benachbart zu den Durchbrüchen angeordnet sind. Die Vorsprünge können elastisch ausgestaltet sein, so dass die Filtervorrichtung in die Einsatzöffnung einer Kaffeekanne oder einer Teekanne eingesetzt werden kann, wobei sich die Vorsprünge verformen. Hierbei wird eine gewisse Reibung zwischen den Vorsprüngen und der Einsatzöffnung der Kaffeekanne oder der Teekanne erzeugt, wodurch das Herausfallen der Filtervorrichtung aus der Kaffeekanne oder der Teekanne verhindert wird. Darüber hinaus können sich die Vorsprünge mehr oder weniger stark verformen. Daher lassen sich Größenunterschiede der Einsatzöffnungen der Kaffeekannen oder der Teekannen überbrücken. Insbesondere dann, wenn die Kaffeekannen oder die Teekannen aus Glas hergestellt sind, ergeben sich häufig vergleichsweise große Toleranzabweichungen im Bereich der Einsatzöffnungen, die mit den Vorsprüngen ausgeglichen werden können. In gewissen Grenzen lässt sich die Filtervorrichtung gemäß dieser Ausführungsform auch für unterschiedliche Kaffeekannen oder Teekannen verwenden.

Bei einer weiteren Ausführungsform kann am unteren Rand ein geschlossener Bodenstahlkörper an den Stahlkörper angeschweißt sein. Wie bereits erwähnt, lässt sich der Stahlkörper unter Verwendung eines Bodenstahlkörpers aus am unteren Rand besonders einfach schließen. Das Schließen ist notwendig, um zu verhindern, dass Kaffeepulver oder Teeblätter in die Kaffeekanne oder die Teekanne gelangen können.

Eine weitergebildete Ausführungsform kann sich dadurch auszeichnen, dass das Kunststoffteil als ein Griffstück ausgebildet ist oder ein Griffstück bildet. Die Ausgestaltung des Kunststoffteils als ein Griffstück erleichtert die Handhabung der Filtervorrichtung. Aufgrund der geringeren Wärmeleitfähigkeit von Kunststoff gegenüber Stahl wird die Gefahr, dass sich ein Benutzer beim Ergreifen der Filtervorrichtung seine Hände verbrennt, deutlich verringert.

Beispielhafte Ausführungsformen der Erfindung werden im Folgenden unter Bezugnahme auf die beigefügten Zeichnungen näher erläutert. Es zeigen
- Figur 1A: eine Unteransicht einer Filtervorrichtung gemäß dem Stand der Technik,
- Figur 1B: die in Figur 1A gezeigte Filtervorrichtung entlang der in Figur 1A definierten Schnittebene A-A,
- Figur 2A: eine Unteransicht einer erfindungsgemäßen Filtervorrichtung nach einem ersten Ausführungsbeispiel in einem ersten Herstellungszustand,
- Figur 2B: die in Figur 2A gezeigte Filtervorrichtung entlang der in Figur 2A definierten Schnittebene B-B,
- Figur 2C: eine Unteransicht der erfindungsgemäßen Filtervorrichtung in einem zweiten Herstellungszustand,
- Figur 2D: die in Figur 2C gezeigte Filtervorrichtung entlang der in Figur 2C definierten Schnittebene C-C,
- Figur 2E: eine prinzipielle und nicht maßstabsgerecht vergrößerte Darstellung des in Figur 2D gekennzeichneten Bereichs A,
- Figur 2F: eine Unteransicht der erfindungsgemäßen Filtervorrichtung in einem dritten, fertiggestellten Herstellungszustand,
- Figur 2G: die in Figur 2F gezeigte Filtervorrichtung entlang der in Figur 2F definierten Schnittebene D-D,
- Figur 3A: eine perspektivische Darstellung eines zweiten Ausführungsbeispiels der erfindungsgemäßen Filtervorrichtung in einem ersten Herstellungszustand,
- Figur 3B: eine perspektivische Darstellung der in Figur 3A gezeigten Filtervorrichtung in einem zweiten, fertiggestellten Herstellungszustand,
- Figur 3C: eine Draufsicht auf die in Figur 3B gezeigte Filtervorrichtung,
- Figur 3D: eine Schnittdarstellung durch die in Figur 3B dargestellte Filtervorrichtung entlang der in Figur 3C definierten Schnittebene E-E,
- Figur 3E: eine prinzipielle und nicht maßstabsgerecht vergrößerte Darstellung des in Figur 3D gekennzeichneten Bereichs B,
- Figur 4A: eine Schnittdarstellung durch ein drittes Ausführungsbeispiel der Filtervorrichtung in einem noch nicht fertiggestellten Herstellungszustand,
- Figur 4B: eine vergrößerte Darstellung des in Figur 4A gekennzeichneten Bereichs C,
- Figur 5A: eine perspektivische Darstellung eines vierten Ausführungsbeispiels der erfindungsgemäßen Filtervorrichtung in einem ersten Herstellungszustand,
- Figur 5B: eine Schnittdarstellung durch die in Figur 5A dargestellte Filtervorrichtung, jedoch im fertiggestellten Herstellungszustand,
- Figur 5C: eine vergrößerte Darstellung des in Figur 5B gekennzeichneten Bereichs D,
- Figur 5D: eine vergrößerte Darstellung des in Figur 5B gekennzeichneten Bereichs E,
- Figur 5E: eine vergrößerte Darstellung des Bodenstahlkörpers der in Figur 5A dargestellten Filtervorrichtung, und
- Figur 5F: eine separate Draufsicht auf eine Bodenplatte des Bodenstahlkörpers nach Figur 5E.

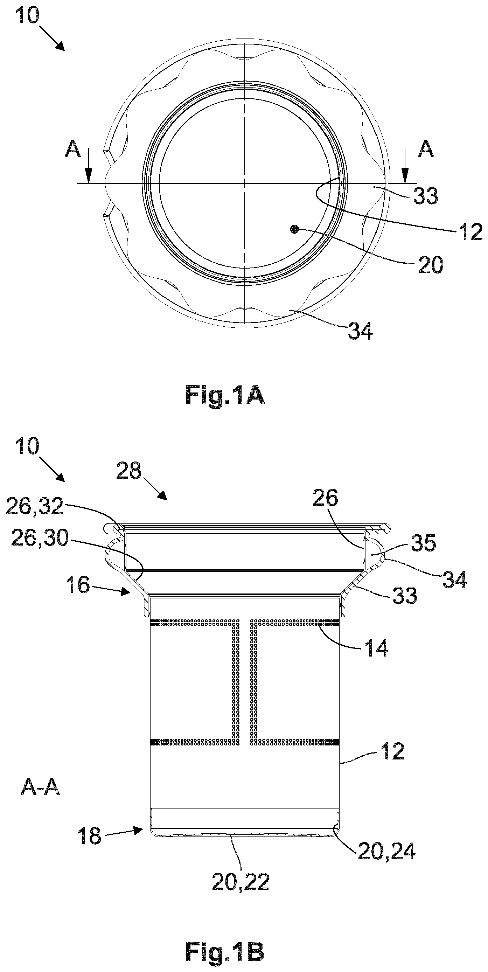

In den Figuren 1A und 1B ist eine aus der WO 2007/082391 A1 bekannte Filtervorrichtung 10 anhand von zwei verschiedenen Ansichten gezeigt. Die Filtervorrichtung 10 weist einen Stahlkörper 12 auf, der mit einer Vielzahl von Filteröffnungen 14 versehen ist. Aus Gründen der Darstellbarkeit sind in Figur 1B nur einige der Filteröffnungen 14 gezeigt. Jedoch sind die Bereiche, welche in Figur 1A von den Filteröffnungen 14 begrenzt sind, vollständig mit weiteren Filteröffnungen 14 versehen.

Der Stahlkörper 12 verläuft im Wesentlichen zylindrisch und kann aus einem ebenen Blech durch Biegen hergestellt werden. Folglich können die Filteröffnungen 14 gestanzt, geätzt oder auf ähnliche Weise gefertigt werden. Das Ätzen eignet sich insbesondere deshalb, da der Stahlkörper eine geringe Wandstärke (< 1 mm) aufweist. Der Stahlkörper 12 weist einen oberen Rand 16 und einen unteren Rand 18 auf. Am unteren Rand 18 ist ein Bodenstahlkörper 20 an den Stahlkörper 12 angeschweißt. Der Bodenstahlkörper 20 weist eine Bodenwand 22 auf, welche jedoch nicht mit Filteröffnungen 14 versehen ist. Zudem weist der Bodenstahlkörper 20 eine Seitenwand 24 auf, welche auch keine Filteröffnungen 14 bildet. Mit der Seitenwand 24 ragt der Bodenstahlkörper 20 in den Stahlkörper 12 hinein, mit welcher der Bodenstahlkörper 20 an der Seitenwand 24 mit dem Bodenstahlkörper 20 verschweißt ist.

Am oberen Rand 16 ist ein oberer Stahlkörper 26 mit dem Stahlkörper 12 verschweißt. Der obere Stahlkörper 26 bildet eine Einfüllöffnung 28, durch welche Kaffeepulver, Teeblätter oder dergleichen sowie Wasser in die Filtervorrichtung 10 eingefüllt werden können. Zudem weist der obere Stahlkörper 26 einen trichterförmigen Abschnitt 30 sowie einen Flansch 32 auf, an welchem ein Kunststoffkörper 33 befestigt ist. Der Kunststoffkörper 33 liegt mit Ausnahme von Auswölbungen 34 am oberen Stahlkörper 12 an. Daher bildet sich zwischen den Auswölbungen 34 und dem Kunststoffkörper 33 jeweils ein Hohlraum 35 aus, weshalb der Kunststoffkörper 33 im Bereich der Auswölbungen 34 eine höhere Elastizität aufweist als im übrigen Bereich.

Wird die Filtervorrichtung 10 in eine Einsatzöffnung einer Kaffeekanne oder einer Teekanne eingesetzt (nicht dargestellt), verformen sich die Auswölbungen 34, so dass eine Reibung zwischen der Einsatzöffnung und den Auswölbungen 34 wirkt. Infolgedessen wird die Filtervorrichtung 10 mit der Kaffeekanne oder der Teekanne verspannt, so dass ein Herausfallen der Filtervorrichtung 10 beim Eingießen von Kaffee oder Tee in eine Tasse verhindert wird. Darüber hinaus können sich die Auswölbungen 34 mehr oder weniger stark verformen, so dass sich die Filtervorrichtung 10 innerhalb von gewissen Grenzen an unterschiedliche Größen der Einsatzöffnung der Kaffeekanne oder der Teekanne anpassen kann.

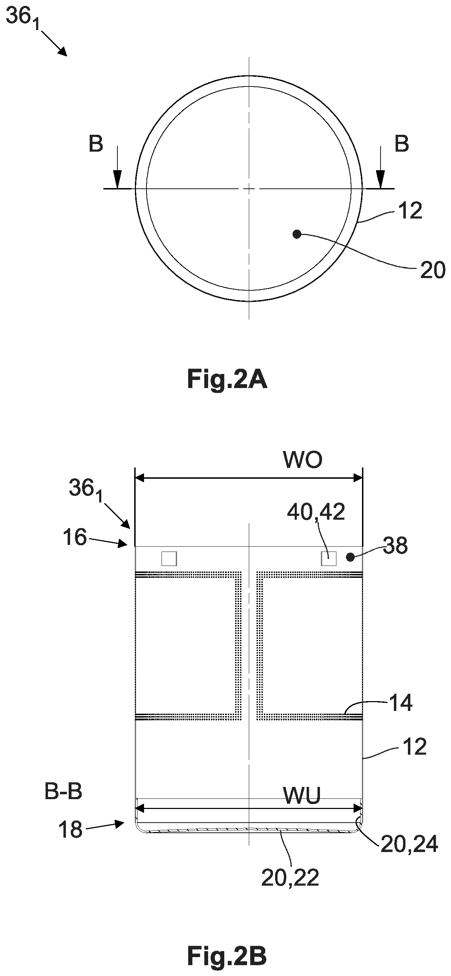

In den Figuren 2A und 2B ist erstes Ausführungsbeispiel einer erfindungsgemäßen Filtervorrichtung 36₁ in einem ersten Herstellungszustand gezeigt. Wie auch die in den Figuren 1A und 1B gezeigte Filtervorrichtung 36₁ umfasst die erfindungsgemäße Filtervorrichtung 36₁ einen Stahlkörper 12 mit einer Vielzahl von Filteröffnungen 14. Auch in diesem Fall sind nur einige der Filteröffnungen 14 gezeigt, wobei das von den Filteröffnungen 14 begrenzte Gebiet des Stahlkörpers 12 vollständig mit Filteröffnungen 14 versehen ist. Der Stahlkörper 12 weist eine im Wesentlichen zylindrische Form mit einem oberen Rand 16 mit einer oberen Randweite WO und einem unteren Rand 18 mit einer unteren Randweite WU auf, wobei die obere Randweite WO in etwa der unteren Randweite WU entspricht. Daher ist die Filtervorrichtung 36₁ gemäß dem ersten Ausführungsbespiel für den Einsatz von Filterpressen geeignet.

Am unteren Rand 18 ist ein Bodenstahlkörper 20 an den Stahlkörper 12 angeschweißt. Der Bodenstahlkörper 20 weist eine Bodenwand 22 auf, die nicht mit Filteröffnungen 14 versehen ist.

Darüber hinaus umfasst der Bodenstahlkörper 20 eine Seitenwand 24, die ebenfalls keine Filteröffnungen 14 bildet. Mit der Seitenwand 24 ist der Bodenstahlkörper 20 mit dem Stahlkörper 12 verschweißt.

Am oberen Rand 16 bildet der Stahlkörper 12 einen Verbindungsabschnitt 38, in welchem insgesamt vier Ausnehmungen 40 angeordnet sind, welche im dargestellten Ausführungsbeispiel der Filtervorrichtung 36₁ als eine den Stahlkörper 12 vollständig durchlaufende Durchgangsöffnung 42 mit viereckigem Querschnitt ausgebildet sind.

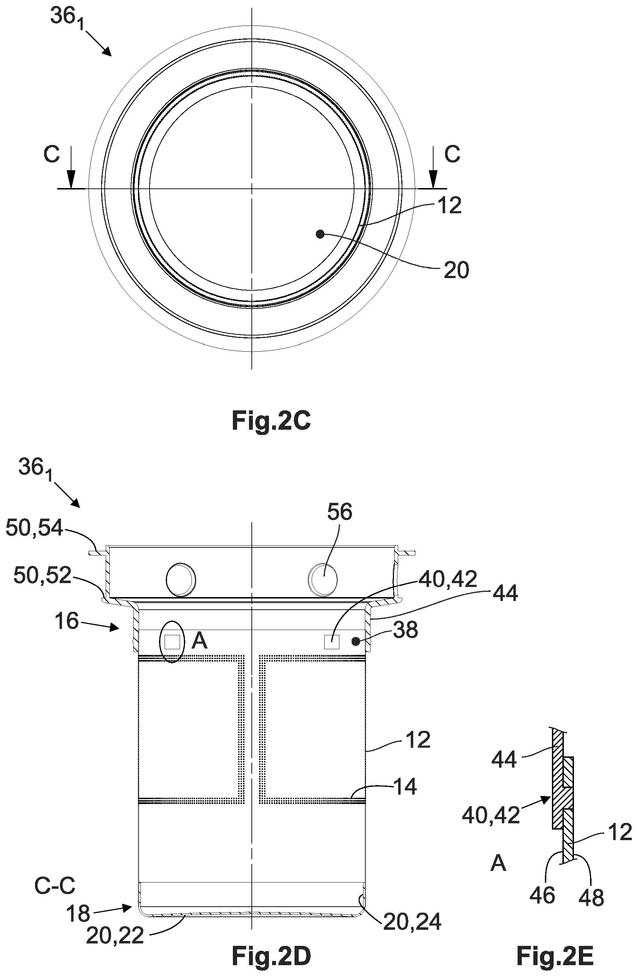

In den Figuren 2C und 2D befindet sich die in den Figuren 2A und 2B dargestellte Filtervorrichtung 36₁ in einem zweiten Herstellungszustand. Am oberen Rand 16 ist ein Kunststoffteil 44 aus einem spritzgussfähigen Kunststoff, beispielsweise Polypropylen (PP) im Verbindungsabschnitt 38 um den Stahlkörper 12 spritzt. Der Stahlkörper 12 weist dabei eine erste Seite 46 und eine zweite Seite 48 auf, wobei im dargestellten Ausführungsbeispiel die erste Seite 46 die Außenseite und die zweite Seite 48 die Innenseite des Stahlkörpers 12 ist. Das Kunststoffteil 44 ist an der ersten Seite 46 um den Stahlkörper 12 gespritzt, wobei das Kunststoffteil 44 in die Durchgangsöffnung 42 hineinragt. Dabei schließt das Kunststoffteil 44 mit der zweiten Seite 48 des Stahlkörpers 12 bündig ab, wie es in Figur 2E anhand einer prinzipiellen Darstellung gezeigt ist. Figur 2E zeigt den in Figur 2D gekennzeichneten Bereich A nicht maßstabsgerecht und stark vereinfacht.

Darüber hinaus bildet das Kunststoffteil 44 einen Aufnahmeabschnitt 50, welcher im dargestellten Ausführungsbeispiel eine untere radiale Erweiterung 52 und eine obere radiale Erweiterung 54 umfasst, wobei die obere radiale Erweiterung 54 sich weiter radial nach außen erstreckt als die untere radiale Erweiterung 52. Darüber hinaus ist das Kunststoffteil 44 mit insgesamt vier Durchbrüchen 56 ausgestattet, welche das Kunststoffteil 44 komplett durchlaufen.

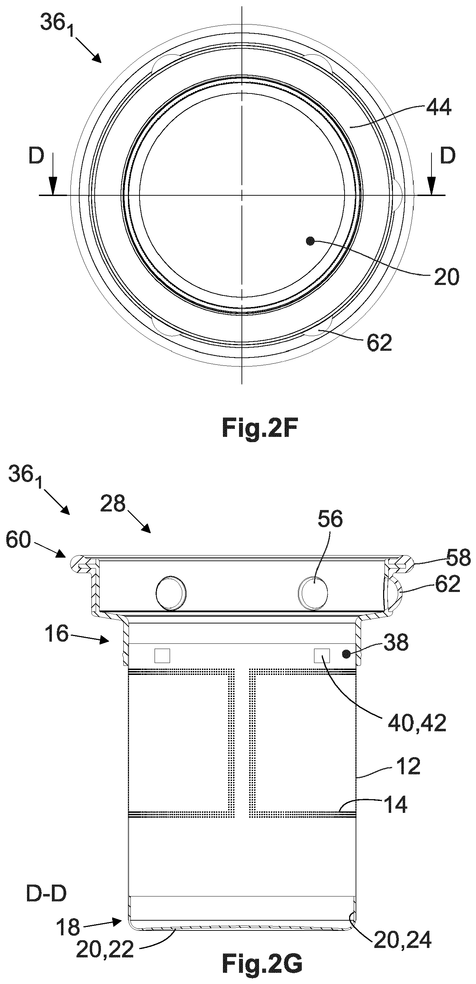

In den Figuren 2F und 2G ist die Filtervorrichtung 36₁ im fertiggestellten Zustand dargestellt. Ein weiteres Kunststoffteil 58 ist um das Kunststoffteil 44 gespritzt, wobei sich das weitere Kunststoffteil 58 der unteren radialen Erweiterung nach oben hin anschließt und die obere radiale Erweiterung 54 komplett umschließt. Das weitere Kunststoffteil 58 kann aus einem thermoplastischen Elastomer (TPE) gefertigt sein. Den TPE kann man beispielsweise anhand der Härte wählen. Vorliegend könnte ein TPE gewählt werden, der eine Härte von zwischen 50 und 68 ShoreA, insbesondere 54 ShoreA aufweist. Als Alternative könnte Styrol-Acrylnitril (SAN) verwendet werden. Im Bereich der oberen radialen Erweiterung 58 bildet das weitere Kunststoffteil 58 einen Auflagerand 60, mit welchem die Filtervorrichtung 36₁ auf eine Kaffeekanne oder Teekanne abgelegt werden kann.

In den Bereichen, in denen sich die Durchbrüche 56 befinden, weist das weitere Kunststoffteil 58 jeweils einen Vorsprung 62 auf, der sich radial nach außen erstreckt. Während das weitere Kunststoffteil 58 radial nach außen direkt dem Kunststoffteil 44 anliegt und folglich mit dem Kunststoffteil 44 in Kontakt tritt, wird dieser Kontakt im Bereich der Vorsprünge 62 und der Durchbrüche 56 aufgehoben. Infolgedessen weist das weitere Kunststoffteil 58 im Bereich der Vorsprünge 62 eine erhöhte Elastizität oder Nachgiebigkeit auf als im übrigen Bereich.

Aus dieser Beschreibung ergibt sich, dass die Filtervorrichtung 36₁ gemäß dem ersten Ausführungsbeispiel den Bodenstahlkörper 20 und den Stahlkörper 12 aufweist, die miteinander verschweißt werden müssen. Im Gegensatz zu der in den Figuren 1A und 1B dargestellten Filtervorrichtung 10 entfallen daher ein Stahlkörper und daher eine zweite Schweißnaht zum Verbinden des Stahlkörpers 12 mit dem nicht mehr vorhandenen Stahlkörper. Das Kunststoffteil 44 und das weiter Kunststoffteil 58 können unter Verwendung desselben Spritzgusswerkzeugs hergestellt werden, ohne dass der Stahlkörper 12 in seiner Position im Spritzgusswerkzeug geändert werden müsste. Die Fertigung der Filtervorrichtung 36₁ gemäß dem ersten Ausführungsbeispiel ist daher deutlich einfacher und kostengünstiger als die Fertigung der der in den Figuren 1A und 1B dargestellten Filtervorrichtung 10.

Die Filtervorrichtung 36₁ kann in eine Einsatzöffnung einer Kaffeekanne oder einer Teekanne eingesetzt werden (nicht dargestellt), wobei die Vorsprünge 62 mehr oder weniger stark verformt werden. Infolgedessen wirkt eine Reibung zwischen der Einsatzöffnung und den Vorsprüngen 62, wodurch die Filtervorrichtung 36₁ gegenüber der Kaffeekanne oder der Teekanne fixiert wird. Ein Herausfallen der Filtervorrichtung 36₁ aus der Kaffeekanne oder der Teekanne kann hierdurch verhindert werden.

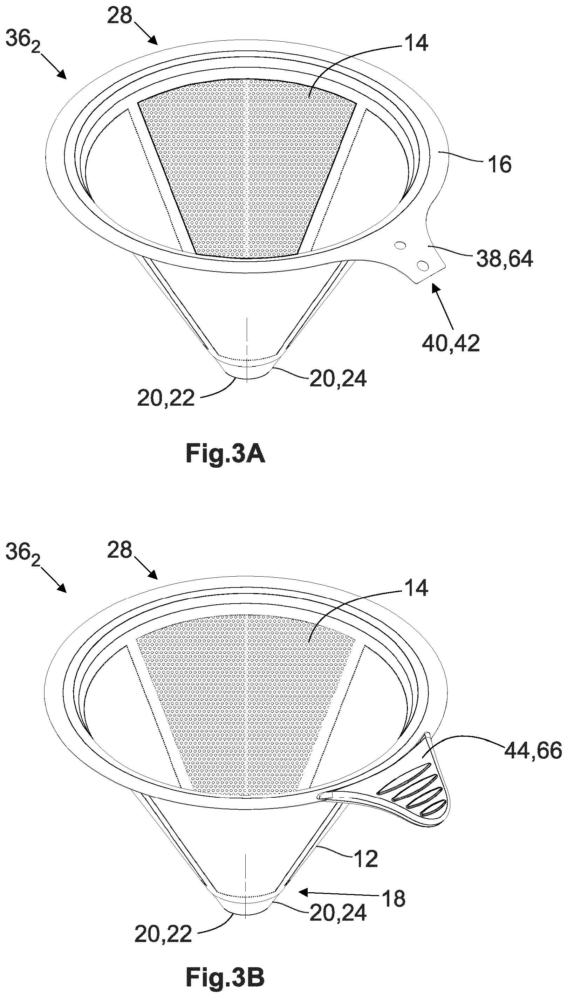

Die Figuren 3A bis 3D zeigen ein zweites Ausführungsbeispiel der erfindungsgemäßen Filtervorrichtung 36₂. Figur 3A zeigt die Filtervorrichtung 36₂ in einem ersten Herstellungszustand. Wie auch im ersten Ausführungsbeispiel ist der Stahlkörper 12 mit einer Vielzahl von Filteröffnungen 14 versehen, welche in den Figuren 3A bis 3D nur teilweise und in den Figuren 3A bis 3D nur rein prinzipiell dargestellt sind. Die Filteröffnungen 14 können einen Durchmesser von ca. 0,2 mm oder größer aufweisen.

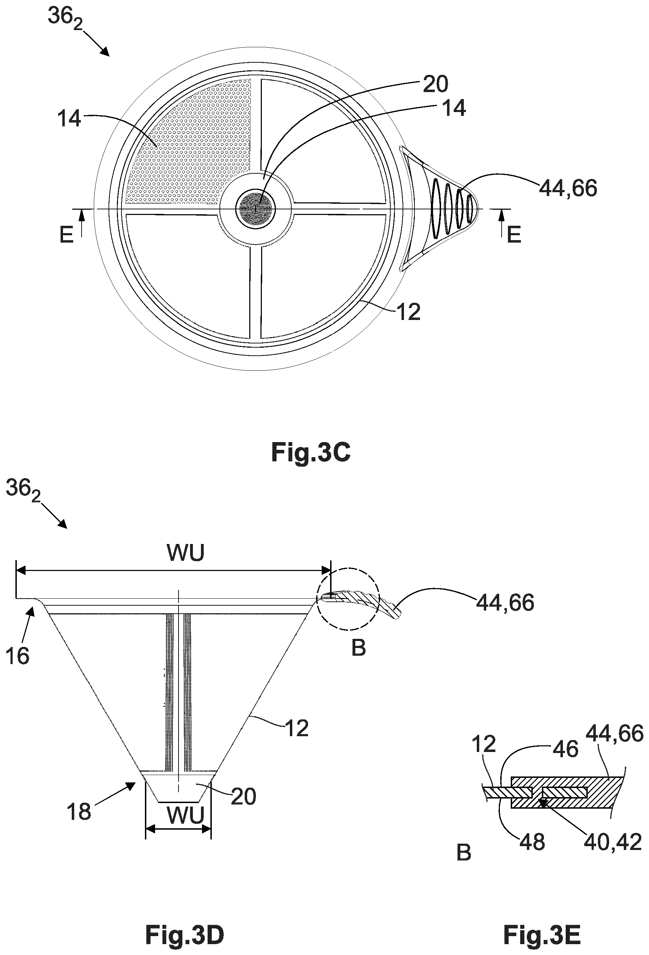

In diesem Fall ist die obere Randweite WO des oberen Randes 16 größer als die untere Randweite WU des unteren Randes 18. Im dargestellten Ausführungsbeispiel weist daher der Stahlkörper 12 eine kegelstumpfförmige Ausbildung auf. Am unteren Rand 18 ist ein Bodenstahlkörper 20 mit dem Stahlkörper 12 verschweißt, der ebenfalls die Form eines Kegelstumpfes hat. Der Bodenstahlkörper 20 weist eine Bodenwand 22 und eine Seitenwand 24 auf, wobei die Bodenwand 22, wie beispielsweise aus der Figur 3C erkennbar ist, mit einer Anzahl von Filteröffnungen 14 versehen ist. Die Seitenwand 24 des Bodenstahlkörpers 20 weist jedoch keine Filteröffnungen 14 auf. Mit der Anzahl und mit dem Durchmesser der Filteröffnungen 14 kann die Verweilzeit des heißen Wassers in der Filtervorrichtung 36₁ bestimmt werden. Wie erwähnt, weisen die Filteröffnungen 14 einen Durchmesser von ca. 0,2 mm auf, so dass diese vergleichsweise klein sind. Im Vergleich zu größeren Filteröffnungen 14 wird hierdurch der Volumenstrom durch den Stahlkörper 12 verringert, so dass die Verweilzeit des heißen Wassers erhöht wird. Auch die Tatsache, dass die Seitenwand 24 des Stahlkörpers 12 keine Filteröffnungen 14 aufweist, führt zu einer Erhöhung der Verweilzeit des heißen Wassers. Hierdurch können mehr Aromastoffe aus dem Kaffeepulver oder den Teeblättern extrahiert werden, ohne dass es zu einem Blockieren der Filteröffnungen 14 kommt.

Der obere Rand 16 des Stahlkörpers 12 ist flanschartig ausgestaltet und erstreckt sich radial nach außen. Der obere Rand 16 umschließt eine Einfüllöffnung 28, durch welche Kaffeepulver, Teeblätter oder dergleichen sowie Wasser in die Filtervorrichtung 36₂ eingefüllt werden können.

Bezugnehmend auf die Figur 3A bildet der obere Rand 16 den Verbindungsabschnitt 38, wobei der Verbindungsabschnitt 38 eine radial nach außen zeigende Zunge 64 aufweist. Auf dieser Zunge 64 sind zwei Durchgangsöffnungen 42 mit kreisförmigem Durchmesser angeordnet.

In den Figuren 3B bis 3D ist die Filtervorrichtung 36₂ gemäß dem zweiten Ausführungsbeispiel in einem zweiten, fertiggestellten Zustand gezeigt. Man erkennt, dass das Kunststoffteil 44 um den Verbindungsabschnitt 38 herum gespritzt worden ist. Das Kunststoffteil 44 ist nach Art eines Griffstücks 66 ausgebildet, an welchem die Filtervorrichtung 36₂ ergriffen werden kann. Die Figur 3E zeigt nicht maßstabsgerechte und rein prinzipiell den in Figur 3D definierten Ausschnitt B. Man erkennt, dass der Stahlkörper 12 eine erste Seite 46 und eine zweite Seite 48 aufweist und die Durchgangsöffnung 42 den Stahlkörper 12 von der ersten Seite 46 zur zweiten Seite 48 durchläuft. Das Kunststoffteil 44 ist sowohl an der ersten Seite 46 als auch an der zweiten Seite 48 um den Stahlkörper 12 gespritzt, wobei das Kunststoffteil 44 die Durchgangsöffnung 42 vollständig ausfüllt.

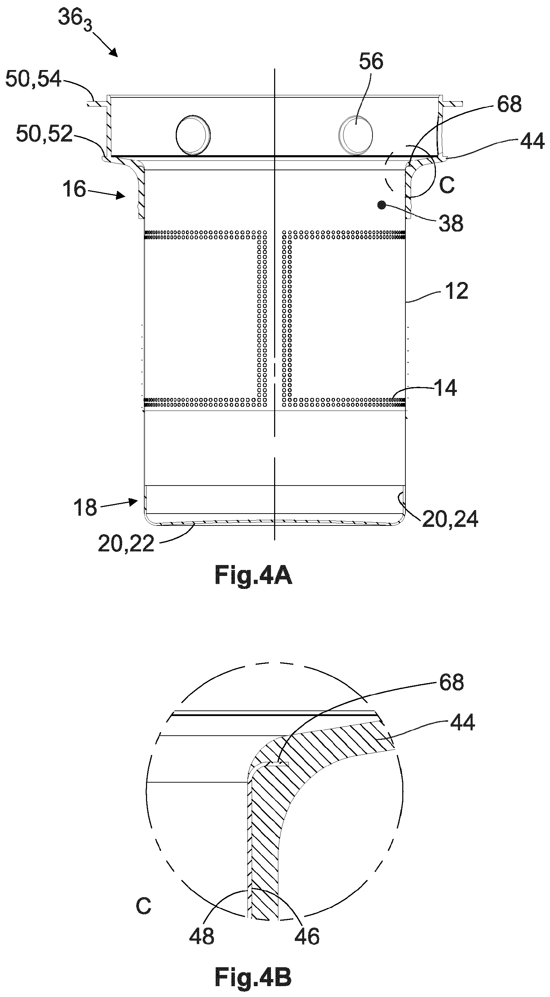

Das in den Figuren 4A und 4B dargestellte dritte Ausführungsbeispiel der Filtervorrichtung 36₃ entspricht weitgehend dem in den Figuren 2A bis 2G dargestellten ersten Ausführungsbeispiel der Filtervorrichtung 36₁. Insofern wird im Folgenden nur auf die wesentlichen Unterschiede eingegangen. Anstelle der Ausnehmungen 40 bildet der Stahlkörper 12 einen radial nach außen vom übrigen Stahlkörper 12 abstehenden Fortsatz 68, der im dritten Ausführungsbeispiel der Filtervorrichtung 36₃ flanschartig ausgestaltet und am oberen Rand 16 des Stahlkörpers 12 angeordnet ist. Der Fortsatz 68 steht dabei über die erste Seite 46 des Stahlkörpers 12 über. Der Fortsatz 68 wird vom Kunststoffteil 44 umschlossen, so dass eine zuverlässige Verbindung zwischen dem Stahlkörper 12 und dem Kunststoffteil 44 geschaffen wird.

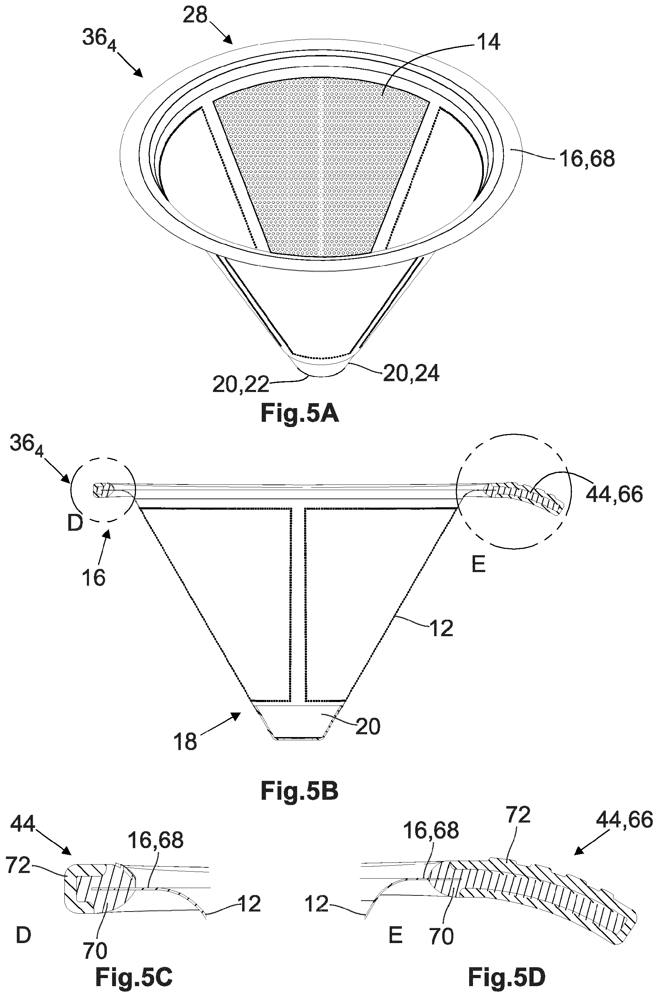

Das in den Figuren 5A bis 5F dargestellte vierte Ausführungsbeispiel der Filtervorrichtung 36₄ entspricht weitgehend dem in den Figuren 3A bis 3E dargestellten zweiten Ausführungsbeispiel der Filtervorrichtung 36₂. Insofern wird im Folgenden nur auf die wesentlichen Unterschiede eingegangen. Wie aus einem Vergleich der Figuren 3A und 5A hervorgeht, weist die Filtervorrichtung 36₁ nach dem vierten Ausführungsbeispiel nicht die Zunge 64 auf, welche im zweiten Ausführungsbeispiel der Filtervorrichtung 36₂ vom Kunststoffteil 44 umschlossen wird (vgl. Figur 3B). Der Fortsatz 68 wird in diesem Fall vom oberen Rand 16 gebildet und wird vollumfänglich vom Kunststoffteil 44 umschlossen, wie aus der Figur 5B hervorgeht.

Insbesondere aus den Figuren 5C und 5D geht hervor, dass das Kunststoffteil 44 einen ersten Kunststoff 70 und einen zweiten Kunststoff 72 umfasst. Der erste Kunststoff 70 ist dabei derjenige Kunststoff, der mit dem Stahlkörper 12 in Kontakt tritt und den Fortsatz 68 umschließt. Der zweite Kunststoff 72 ist auf den ersten Kunststoff 70 aufgebracht und hat im vierten Ausführungsbeispiel der Filtervorrichtung 36₁ keinen Kontakt mit dem Stahlkörper 12. Ein Benutzer ergreift die Filtervorrichtung 36₁ mit dem zweiten Kunststoff 72 unter Verwendung des Griffstücks 66.

Der erste Kunststoff 70 kann ein Polypropylen (PP) sein und eine höhere Härte aufweisen als der zweite Kunststoff 72. Der zweite Kunststoff 72 kann eine geringere Wärmeleitfähigkeit aufweisen als der erste Kunststoff 70. Als zweiter Kunststoff 72 bietet sich insbesondere ein thermoplastischer Elastomer (TPE) an.

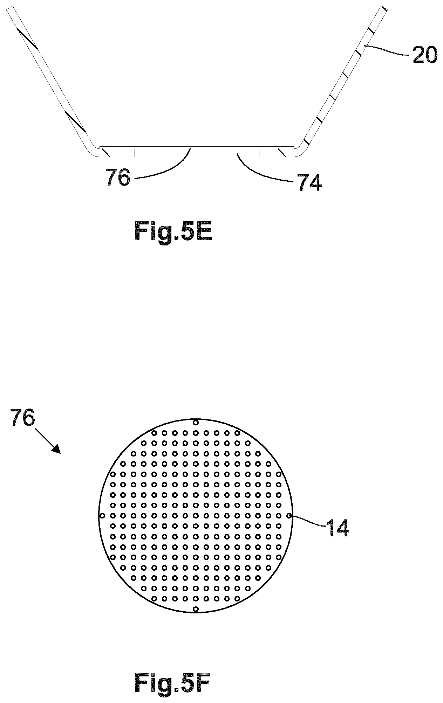

In Figur 5E ist der Bodenstahlkörper 20 der Filtervorrichtung 36₃ separat gezeigt. Im Gegensatz zu dem Bodenstahlkörper 20 der Filtervorrichtung 36₂ nach dem zweiten Ausführungsbeispiel ist der Bodenstahlkörper 20 der Filtervorrichtung 36₁ nach dem vierten Ausführungsbeispiel zweiteilig ausgeführt und bildet eine Bodenöffnung 74, welche von einer Bodenplatte 76, die in Figur 5F separat gezeigt ist, im bestimmungsgemäßen Zustand bedeckt wird. Die Bodenplatte 76 weist eine Vielzahl von Filteröffnungen 14 auf, während der übrige Bodenstahlkörper 20 keine Filteröffnungen 14 aufweist. Die Bodenplatte 76 kann beispielsweise mittels einer Schweißnaht fest mit dem Bodenstahlkörper 20 verbunden oder nur auf den Bodenstahlkörper 20 aufgelegt sein. Im letzteren Fall kann die Bodenplatte 76 beispielsweise zu Reinigungszwecken vom Bodenstahlkörper 20 entfernt werden.

### Bezugszeichenliste

- 10: Filtervorrichtung
- 12: Stahlkörper
- 14: Filteröffnung
- 16: oberer Rand
- 18: unterer Rand

- 20: Bodenstahlkörper
- 22: Bodenwand
- 24: Seitenwand
- 26: oberer Stahlkörper
- 28: Einfüllöffnung

- 30: trichterförmiger Abschnitt
- 32: Flansch
- 33: Kunststoffkörper
- 34: Auswölbung
- 35: Hohlraum
- 36: Filtervorrichtung
- 36₁ bis 36₄: Filtervorrichtung
- 38: Verbindungsabschnitt

- 40: Ausnehmung
- 42: Durchgangsöffnung
- 44: Kunststoffteil
- 46: erste Seite
- 48: zweite Seite

- 50: Aufnahmeabschnitt
- 52: untere radiale Erweiterung
- 54: obere radiale Erweiterung
- 56: Durchbruch
- 58: weiteres Kunststoffteil
- 60: Auflagerand
- 62: Vorsprung
- 64: Zunge
- 66: Griffstück
- 68: Fortsatz
- 70: erster Kunststoff
- 72: zweiter Kunststoff
- 74: Bodenöffnung
- 76: Bodenplatte

- WO: obere Randweite
- WU: untere Randweite

## Patentansprüche

1. Filtervorrichtung (36) zum Filtern von unlöslichem Material, welches bei der Zubereitung von Getränken verwendet wird, insbesondere zum Filtern von Teeblättern oder Kaffeepulver, umfassend
- einen Stahlkörper (12) mit einer Vielzahl von Filteröffnungen (14),
- zumindest ein Kunststoffteil (44) aus einem spritzgussfähigen Kunststoff, der in einem Verbindungsabschnitt (38) des Stahlkörpers (12) um den Stahlkörper (12) spritzt ist, wobei
∘ im Verbindungsabschnitt (38) zumindest eine Ausnehmung (40) angeordnet ist, welche zumindest teilweise vom Kunststoffteil (44) ausgefüllt wird, oder
∘ der Stahlkörper (12) im Verbindungsabschnitt (38) einen vom Stahlkörper (12) abstehenden Fortsatz (68) bildet, welcher zumindest teilweise vom Kunststoffteil (44) umschlossen ist, **dadurch**
**gekennzeichnet, dass** die Filtervorrichtung (36) ein weiteres Kunststoffteil (58) aufweist, und das Kunststoffteil (44) zumindest einen Aufnahmeabschnitt (50) für das weitere Kunststoffteil (58) aufweist, welches um das Kunststoffteil (44) gespritzt ist.

2. Filtervorrichtung (36) nach Anspruch 1,
**dadurch gekennzeichnet, dass** die Ausnehmung (40) als eine den Stahlkörper (12) vollständig durchlaufende Durchgangsöffnung (42) ausgebildet ist.

3. Filtervorrichtung (36) nach Anspruch 2,
**dadurch gekennzeichnet, dass**
- der Stahlkörper (12) eine erste Seite (46) und eine zweite Seite (48) aufweist,
- die Durchgangsöffnung (42) den Stahlkörper (12) von der ersten Seite (46) zur zweiten Seite (48) durchläuft, und
- das Kunststoffteil (44) an der ersten Seite (46) und an der zweiten Seite (48) um den Stahlkörper (12) gespritzt ist und die Durchgangsöffnung (42) vollständig ausfüllt.

4. Filtervorrichtung (36) nach Anspruch 3,
**dadurch gekennzeichnet, dass**
- der Stahlkörper (12) einen oberen Rand (16) und einen unteren Rand (18) aufweist,
- der obere Rand (16) radial auswärts vom übrigen Stahlkörper (12) absteht und eine Einfüllöffnung (28) umschließt,
- der Verbindungsabschnitt (38) vom oberen Rand (16) gebildet wird und
- das Kunststoffteil (44) am oberen Rand (16) angeordnet ist.

5. Filtervorrichtung (36) nach Anspruch 4,
**dadurch gekennzeichnet, dass** das Kunststoffteil (44)
- einen ersten Kunststoff (70) und einen zweiten Kunststoff (72) umfasst, wobei
- der erste Kunststoff (70) die Ausnehmung (40) ausfüllt oder den Fortsatz (68) umschließt und der zweite Kunststoff (72) den ersten Kunststoff (70) zumindest teilweise umschließt.

6. Filtervorrichtung (36) nach Anspruch 5,
**dadurch gekennzeichnet, dass**
- der erste Kunststoff (70) eine geringere Härte aufweist als der zweite Kunststoff (72) und/oder
- der zweite Kunststoff (72) eine geringere Wärmeleitfähigkeit aufweist als der erste Kunststoff (70).

7. Filtervorrichtung (36) nach einem der Ansprüche 4 bis 6, **dadurch gekennzeichnet, dass**
- der obere Rand (16) eine obere Randweite (WO) und der untere Rand (18) eine untere Randweite (WU) aufweist, wobei die obere Randweite (WO) größer ist als die untere Randweite (WU).

8. Filtervorrichtung (36) nach einem der Ansprüche 4 bis 7, **dadurch gekennzeichnet, dass**
am unteren Rand (18) ein Bodenstahlkörper (20) an den Stahlkörper (12) angeschweißt ist.

9. Filtervorrichtung (36) nach Anspruch 8,
**dadurch gekennzeichnet, dass**
der Bodenstahlkörper (20) eine Bodenwand (22) und zumindest eine Seitenwand (24) aufweist, wobei
- die Bodenwand (22) mit einer Vielzahl von Filteröffnungen (14) versehen ist, oder
die Bodenwand (22) eine Bodenöffnung (74) umschließt, welche von einer Bodenplatte (76) mit einer Vielzahl von Filteröffnungen (14) bedeckt wird.

10. Filtervorrichtung (36) nach Anspruch 2,
**dadurch gekennzeichnet, dass**
- der Stahlkörper (12) eine erste Seite (46) und eine zweite Seite (48) aufweist,
- die Durchgangsöffnung (42) den Stahlkörper (12) von der ersten Seite (46) zur zweiten Seite (48) durchläuft, und
- das Kunststoffteil (44)
∘ an der ersten Seite (46) um den Stahlkörper (12) gespritzt ist, wobei das Kunststoffteil (44) im Bereich der Durchgangsöffnung (42) mit der zweiten Seite (48) bündig abschließt oder
∘ an der zweiten Seite (48) um den Stahlkörper (12) gespritzt ist, wobei das Kunststoffteil (44) im Bereich der Durchgangsöffnung (42) mit der ersten Seite (46) bündig abschließt oder
- das Kunststoffteil (44)
∘ an der ersten Seite (46) um den Stahlkörper (12) gespritzt ist und der Fortsatz (68) über die erste Seite (46) übersteht, oder
∘ an der zweiten Seite (48) um den Stahlkörper (12) gespritzt ist und der Fortsatz (68) über die zweite Seite (48) übersteht.

11. Filtervorrichtung (36) nach Anspruch 10,
**dadurch gekennzeichnet, dass**
- der Stahlkörper (12) einen oberen Rand (16) und einen unteren Rand (18) aufweist,
- der obere Rand (16) eine Einfüllöffnung (28) umschließt,
- der Verbindungsabschnitt (38) vom oberen Rand (16) gebildet wird und
- das Kunststoffteil (44) am oberen Rand (16) angeordnet ist.

12. Filtervorrichtung (36) nach Anspruch 11,
**dadurch gekennzeichnet, dass**
- das Kunststoffteil (44) eine Anzahl von außerhalb des Stahlkörpers (12) angeordneten Durchbrüchen (56) und
- das weitere Kunststoffteil (58) dieselbe Anzahl von Vorsprüngen aufweist, welche benachbart zu den Durchbrüchen (56) angeordnet sind.

13. Filtervorrichtung (36) nach Anspruch 12,
**dadurch gekennzeichnet, dass**
am unteren Rand (18) ein geschlossener Bodenstahlkörper (20) an den Stahlkörper (12) angeschweißt ist.

14. Filtervorrichtung (36) nach einem der vorherigen Ansprüche, **dadurch gekennzeichnet, dass** das Kunststoffteil (44) als ein Griffstück (66) ausgebildet ist oder ein Griffstück (66) bildet.

## Claims

1. Filter device (36) for filtering insoluble material used in the preparation of beverages, in particular for filtering tea leaves or coffee powder, comprising
- a steel body (12) with a plurality of filter openings (14),
- at least one plastic part (44) made of an injection-moldable plastic, which is injection-molded around the steel body (12) in a connecting section (38) of the steel body (12), wherein
∘ at least one recess (40) is arranged in the connecting section (38), which is at least partially filled by the plastic part (44), or
∘ the steel body (12) forms an extension (68) in the connecting section (38) which protrudes from the steel body (12) and is at least partially surrounded by the plastic part (44),
**characterized in that** the filter device (36) has a further plastic part (58), and the plastic part (44) has at least one receiving section (50) for the further plastic part (58), which is injection-molded around the plastic part (44).

2. Filter device (36) according to claim 1,
**characterized in that** the recess (40) is formed as a passage opening (42) completely passing through the steel body (12).

3. Filter device (36) according to claim 2,
**characterized in that**
- the steel body (12) has a first side (46) and a second side (48),
- the passage opening (42) passes through the steel body (12) from the first side (46) to the second side (48), and
- the plastic part (44) is injection-molded around the steel body (12) at the first side (46) and at the second side (48) and completely fills the passage opening (42).

4. Filter device (36) according to claim 3,
**characterized in that**
- the steel body (12) has an upper margin (16) and a smaller margin (18),
- the upper margin (16) protrudes radially outward from the remaining steel body (12) and surrounds a filling opening (28),
- the connecting section (38) is formed by the upper margin (16), and
- the plastic part (44) is arranged at the upper margin (16).

5. Filter device (36) according to claim 4,
**characterized in that** the plastic part (44)
- comprises a first plastic (70) and a second plastic (72), wherein
- the first plastic (70) fills the recess (40) or surrounds the extension (68) and the second plastic (72) at least partially surrounds the first plastic (70).

6. Filter device (36) according to claim 5,
**characterized in that**
- the first plastic (70) has a smaller hardness than the second plastic (72) and/or
- the second plastic (72) has a smaller thermal conductivity than the first plastic (70).

7. Filter device (36) according to one of claims 4 to 6, **characterized in that**
- the upper margin (16) has an upper margin width (WO) and the lower margin (18) has a lower margin width (WU), wherein the upper margin width (WO) is greater than the lower margin width (WU).

8. Filter device (36) according to one of claims 4 to 7, **characterized in that**
a bottom steel body (20) is welded to the steel body (12) at the lower margin (18).

9. Filter device (36) according to claim 8,
**characterized in that**
the bottom steel body (20) has a bottom wall (22) and at least one side wall (24), wherein
- the bottom wall (22) is provided with a plurality of filter openings (14), or
the bottom wall (22) surrounds a bottom opening (74) which is covered by a bottom plate (76) having a plurality of filter openings (14).

10. Filter device (36) according to claim 2,
**characterized in that**
- the steel body (12) has a first side (46) and a second side (48),
- the passage opening (42) passes through the steel body (12) from the first side (46) to the second side (48), and
- the plastic part (44)
∘ is injection-molded around the steel body (12) at the first side (46), wherein the plastic part (44) is terminating flush with the second side (48) in the region of the passage opening (42) or
∘ is injection-molded around the steel body (12) at the second side (48), wherein the plastic part (44) is terminating flush with the first side (46) in the region of the passage opening (42), or
- the plastic part (44)
∘ is injection-molded around the steel body (12) at the first side (46) and the extension (68) protrudes beyond the first side (46), or
∘ is injection-molded at the second side (48) around the steel body (12) and the extension (68) protrudes beyond the second side (48).

11. Filter device (36) according to claim 10,
**characterized in that**
- the steel body (12) has an upper margin (16) and a lower margin (18),
- the upper margin (16) surrounds a filling opening (28),
- the connecting section (38) is formed by the upper margin (16), and
- the plastic part (44) is arranged on the upper margin (16).

12. Filter device (36) according to claim 11,
**characterized in that**
- the plastic part (44) has a number of apertures (56) arranged outside the steel body (12), and
- the further plastic part (58) has the same number of projections arranged adjacent to the apertures (56).

13. Filter device (36) according to claim 12,
**characterized in that**
a closed bottom steel body (20) is welded to the steel body (12) at the lower margin (18).

14. Filter device (36) according to one of the preceding claims,
**characterized in that** the plastic part (44) is formed as a handle piece (66) or forms a handle piece (66).

## Revendications

1. Dispositif de filtration (36) destiné à filtrer des matières insolubles utilisées dans la préparation de boissons, en particulier pour filtrer des feuilles de thé ou de la poudre de café, comprenant
- un corps en acier (12) avec une pluralité d'ouvertures de filtration (14),
- au moins une pièce en plastique (44) en plastique moulable par injection, qui est moulée par injection autour du corps en acier (12) dans une partie de raccordement (38) du corps en acier (12),
∘ au moins un évidement (40) est disposé dans la partie de raccordement (38), lequel est au moins partiellement rempli par la pièce en plastique (44), ou
∘ le corps en acier (12) forme dans la partie de raccordement (38) un prolongement (68) qui dépasse du corps en acier (12) et qui est au moins partiellement entouré par la pièce en plastique (44),
**caractérisé en ce que** le dispositif de filtration (36) comporte une autre pièce en plastique (58) et la pièce en plastique (44) comporte au moins une partie de réception (50) pour l'autre pièce en plastique (58) qui est moulée par injection autour de la pièce en plastique (44).

2. Dispositif de filtration (36) selon la revendication 1, **caractérisé en ce que** l'évidement (40) est conçu comme une ouverture de passage (42) traversant complètement le corps en acier (12).

3. Dispositif de filtration (36) selon la revendication 2, **caractérisé en ce que**
- le corps en acier (12) présente un premier côté (46) et un deuxième côté (48),
- l'ouverture traversante (42) traverse le corps en acier (12) du premier côté (46) au deuxième côté (48), et
- la pièce en plastique (44) est moulée par injection sur le premier côté (46) et sur le deuxième côté (48) autour du corps en acier (12) et remplit complètement l'ouverture traversante (42).

4. Dispositif de filtration (36) selon la revendication 3, **caractérisé en ce que**
- le corps en acier (12) présente un bord supérieur (16) et un bord inférieur (18),
- le bord supérieur (16) fait saillie radialement vers l'extérieur par rapport au reste du corps en acier (12) et entoure une ouverture de remplissage (28),
- la partie de raccordement (38) est formée par le bord supérieur (16) et
- la pièce en plastique (44) est disposée sur le bord supérieur (16).

5. Dispositif de filtration (36) selon la revendication 4, **caractérisé en ce que** la pièce en plastique (44)
- comprend une première matière plastique (70) et une deuxième matière plastique (72),
- la première matière plastique (70) remplit l'évidement (40) ou entoure le prolongement (68) et la deuxième matière plastique (72) entoure au moins partiellement la première matière plastique (70).

6. Dispositif de filtration (36) selon la revendication 5, **caractérisé en ce que**
- la première matière plastique (70) présente une dureté inférieure à celle de la deuxième matière plastique (72) et/ou
- la deuxième matière plastique (72) présente une conductivité thermique inférieure à celle de la première matière plastique (70).

7. Dispositif de filtration (36) selon l'une des revendications 4 à 6,
**caractérisé en ce que**
- le bord supérieur (16) présente une largeur de bord supérieure (WO) et le bord inférieur (18) présente une largeur de bord inférieure (WU), la largeur de bord supérieure (WO) étant supérieure à la largeur de bord inférieure (WU).

8. Dispositif de filtration (36) selon l'une des revendications 4 à 7,
**caractérisé en ce que**
un corps en acier de fond (20) est soudé au corps en acier (12) au niveau du bord inférieur (18).

9. Dispositif de filtration (36) selon la revendication 8, **caractérisé en ce que**
le corps en acier de fond (20) comporte une paroi de fond (22) et au moins une paroi latérale (24),
- la paroi de fond (22) est pourvue d'une pluralité d'ouvertures de filtration (14), ou
la paroi de fond (22) entoure une ouverture de fond (74) qui est recouverte par une plaque de fond (76) comportant une pluralité d'ouvertures de filtration (14).

10. Dispositif de filtration (36) selon la revendication 2, **caractérisé en ce que**
- le corps en acier (12) présente un premier côté (46) et un deuxième côté (48),
- l'ouverture de passage (42) traverse le corps en acier (12) du premier côté (46) au deuxième côté (48), et
- la pièce en plastique (44)
∘ est moulée par injection sur le premier côté (46) autour du corps en acier (12), la pièce en plastique (44) affleurant le deuxième côté (48) dans la zone de l'ouverture de passage (42) ou
∘ est moulée par injection sur le deuxième côté (48) autour du corps en acier (12), la pièce en plastique (44) affleurant le premier côté (46) dans la zone de l'ouverture de passage (42) ou
- la pièce en plastique (44)
∘ est moulée par injection sur le premier côté (46) autour du corps en acier (12) et que le prolongement (68) dépasse du premier côté (46), ou
∘ est moulée par injection sur le deuxième côté (48) autour du corps en acier (12) et que le prolongement (68) dépasse du deuxième côté (48).

11. Dispositif de filtration (36) selon la revendication 10, **caractérisé en ce que**
- le corps en acier (12) présente un bord supérieur (16) et un bord inférieur (18),
- le bord supérieur (16) entoure une ouverture de remplissage (28),
- la partie de raccordement (38) est formée par le bord supérieur (16) et
- la pièce en plastique (44) est disposée sur le bord supérieur (16).

12. Dispositif de filtration (36) selon la revendication 11, **caractérisé en ce que**
- la pièce en plastique (44) comporte un certain nombre d'ouvertures (56) disposées à l'extérieur du corps en acier (12) et
- l'autre pièce en plastique (58) comporte le même nombre de saillies qui sont disposées à proximité des ouvertures (56).

13. Dispositif de filtration (36) selon la revendication 12, **caractérisé en ce qu'**un corps en acier de fond (20) est soudé au corps en acier (12) sur le bord inférieur (18).

14. Dispositif de filtration (36) selon l'une des revendications précédentes,
**caractérisé en ce que** la pièce en plastique (44) est conçue comme une poignée (66) ou forme une poignée (66).
